# DEMANDE DE BREVET EUROPEEN

(11) **EP 0 904 926 A1**
(43) Date de publication de la demande: **31.03.1999**
(21) Numéro de dépôt: 97420175.8
(22) Date de dépôt: 29.09.1997
(51) Int. Cl.: B29C 51/32

(54) **Dispositif permettant l'exécution de prédécoupes ou découpes sur une pièce thermoformée**

(71) Demandeur: Velfor-Plast S.A., 43500 Saint Pal en Chalençon (FR)
(72) Inventeur: Brun, Pierre, 43500 Saint Pal en Chalencon (FR)
(74) Mandataire: Dupuis, François

(57) **Abrégé**

Le dispositif permettant l'exécution de prédécoupe ou découpe sur une pièce thermoformée dans un ensemble moule/contre-moule, est remarquable en ce que :
- ledit contre-moule (4) est agencé pour recevoir intérieurement une plate-forme (5) support d'un bloc de découpe (6) susceptible de réaliser dans certaines phases de fonctionnement la ou les lignes de prédécoupe ou des découpes du matériau,
- la plate-forme (5) est montée sur une structure porteuse (7),
- la structure (7) est susceptible d'être translatée dans un mouvement vertical élévateur ou descendant selon la phase de fonctionnement du dispositif, à l'aide d'un moyen pousseur (8) formant came associé à un moyen de commande (9),
- le bloc de découpe assure la formation de la ou des lignes de découpe lors de la fermeture du moule/contre-moule et formation de la pièce thermoformée.

## Description

L'invention se rattache aux secteurs techniques du matériel et d'outillage-machine servant à réaliser des pièces en matériau plastique par thermoformage.

Il est bien connu de réaliser des pièces thermoformées pour constituer par exemple des emballages ou autres conditionnements qui sont agencés avec des bordures périphériques soudées et avec intérieurement des lignes de prédécoupe dites à "mi-chair". Les soudures réalisées sur tout ou partie de la périphérie de l'emballage assurent son inviolabilité. Pour permettre d'avoir accès à l'intérieur de l'emballage, il faut alors déchirer une partie de la bordure périphérique en utilisant la ou les lignes de prédécoupe.

Il est connu de réaliser des prédécoupes en même temps que la fabrication de l'article thermoformé. Cependant, les opérations s'effectuent sur des machines spéciales complexes et coûteuses.

Le but recherché selon l'invention était donc de concevoir un nouveau dispositif qui permette par thermoformage de réaliser en une seule fois l'article, l'emballage ou le conditionnement aux formes et volumes souhaités avec la ou les lignes de prédécoupe appropriées dans des conditions économiques satisfaisantes, peu coûteuses, eu égard à la faible valeur ajoutée du matériau traité.

Un autre but recherché était de concevoir un dispositif qui mette en oeuvre des mécanismes simplifiés assurant une fiabilité de fonctionnement de la machine lors des opérations de thermoformage du matériau plastique.

Selon une première caractéristique de l'invention, le dispositif permettant l'exécution de prédécoupe ou découpe sur une pièce thermoformée dans un ensemble moule/contre-moule, est remarquable en ce que :
- ledit contre-moule est agencé pour recevoir intérieurement une plate-forme support d'un bloc de découpe susceptible de réaliser dans certaines phases de fonctionnement la ou les lignes de prédécoupe ou des découpes du matériau,
- la plate-forme est montée sur une structure porteuse,
- la structure est susceptible d'être translatée dans un mouvement vertical élévateur ou descendant selon la phase de fonctionnement du dispositif, à l'aide d'un moyen pousseur formant came associé à un moyen de commande,
- le bloc de découpe assure la formation de la ou des lignes de découpe lors de la fermeture du moule/contre-moule et formation de la pièce thermoformée.

Selon une autre caractéristique, le contre-moule présente une forme évidée intérieurement susceptible de recevoir intérieurement les mécanismes précités, et en ce que adjacent au contre-moule, est prévue une chambre susceptible de recevoir le moyen de commande sous forme d'un vérin dont la tige est solidaire et accouplée de toute manière appropriée avec le moyen pousseur formant came, ledit vérin pneumatique étant commandé à partir d'un distributeur à commande pneumatique, lui-même sollicité par un moyen de détection de la pression à l'intérieur de l'ensemble moule/contre-moule.

Ces caractéristiques et d'autres encore ressortiront bien de la suite de la description.

Pour fixer l'objet de l'invention illustré d'une manière non limitative aux figures des dessins où :
- la figure 1 est une vue en perspective d'un emballage thermoformé quelconque présentant une bordure périphérique avec lignes de prédécoupe.
- la figure 2 est une vue à caractère schématique illustrant le dispositif dans la phase initiale d'ouverture du moule et du contre-moule.
- la figure 3 est une vue similaire à la figure 2 dans laquelle les moule et contre-moule ont été rapprochés avant l'opération de thermoformage.
- la figure 4 est une vue similaire à la figure 3 dans laquelle l'opération de thermoformage a été effectuée simultanément avec la formation des lignes de prédécoupe.
- la figure 5 est une vue similaire à la figure 4 dans laquelle les moule et contre-moule ont été ouverts après formation de l'emballage en vue de son évacuation.

Afin de rendre plus concret l'objet de l'invention, on le décrit maintenant d'une manière non limitative illustré aux figures des dessins.

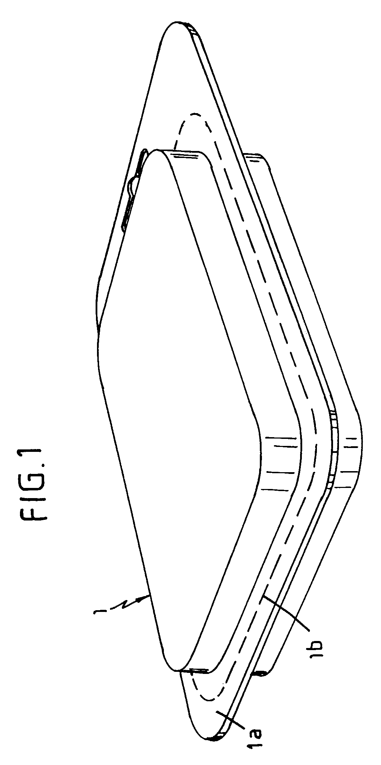

On a représenté figure 1 un emballage thermoformé référencé dans son ensemble par (1) de forme et volume quelconques, réalisé en matière plastique et présentant une bordure périphérique (1a) avec au moins une ligne de prédécoupe (1b). Cet emballage est obtenu à partir d'une bande de matériau (2) méplate en provenance d'une bobine de distribution non représentée ou similaire.

Cette bande de matériau est présentée devant le dispositif de thermoformage qui comprend un moule (3) à position fixe par exemple et un contre-moule (4) à position mobile, commandé de toute manière bien connue.

Le moule (3) présente dans sa partie basse une cavité (3a) dont les formes et dimensions correspondent au produit à obtenir. Le moule (3) présente une cheminée (3b) avec conduits (3c) susceptibles de permettre d'une manière connue l'aspiration du matériau (2) à thermoformer.

Selon l'invention, le contre-moule (4) est agencé avec une plate-forme (5) support d'un bloc de découpe (6) susceptible de réaliser dans certaines phases de fonctionnement la ou les lignes de prédécoupe ou des découpes du matériau. La plate-forme (5) est montée sur une structure (7) porteuse. Celle-ci peut être articulée pour permettre l'adaptation du bloc de découpe à toute configuration donnée du matériau et assurer ainsi les éventuelles corrections de positionnement et d'angulation inhérent au fonctionnement du dispositif. La structure (7) porteuse de la plate-forme (5) et du bloc de découpe (6) est susceptible d'être translatée dans un mouvement vertical élévateur ou descendant selon la phase de fonctionnement du dispositif, à l'aide d'un moyen pousseur (8) formant came associé à un moyen de commande (9).

Plus spécifiquement, le contre-moule (4) présente une forme évidée (4a) intérieurement susceptible de recevoir les mécanismes précités. Adjacent au contre-moule, est prévue une chambre (10) fermée susceptible de recevoir le moyen de commande (9) précité qui peut être par exemple établi sous forme d'un vérin pneumatique. Ce dernier comprend ainsi une tige (9a) solidaire et accouplée de toute manière appropriée avec le moyen pousseur (8) formant came. Le vérin pneumatique est commandé à partir d'un distributeur à commande pneumatique référencé dans son ensemble par (11), la liaison étant réalisée de toute manière connue pour l'homme de l'art.

Le distributeur à commande pneumatique (11) est associé à un moyen de contrôle (17) sous forme de sonde ou équivalent susceptible de détecter la pression à l'intérieur de la cavité interne du contre moule. Un conduit (18) relie ce moyen (17) au distributeur (11).

Le moyen pousseur (8) présente un profil supérieur formant rampe (8a) dont l'orientation s'effectue dégressivement en regard du piston. Cette rampe fait office de came lors du déplacement du moyen pousseur. A cet effet, ledit moyen pousseur est disposé et guidé entre un ou des ensembles de galets (12) et contre-galets (13). Les contre-galets (13) sont situés à partir de moyens supports (14) fixés dans le fond du contre-moule (4). Les galets (12) sont associés avec la structure porteuse (7). Celle-ci est agencée avec des moyens qui permettent son maintien et sa fixation par rapport aux côtés latéraux du contre-moule et elle est soumise à un mouvement d'élévation ou d'abaissement comme il sera indiqué par la suite.

L'outil de découpe ou de prédécoupe (6) de toutes formes appropriées est positionné sur la plate-forme (5) associée à la structure porteuse (7) d'une manière démontable par rapport à celle-ci pour permettre le changement des moyens de coupe en fonction des besoins.

Latéralement, sur la structure porteuse (7) ou sur la plate-forme (5) sont disposées des butées (16) d'arrêt, calibrées, qui limitent la profondeur de découpe à réaliser sur le matériau sur toute ou partie de l'épaisseur de celui-ci. Ces butées sont destinées à être positionnées en regard du moule dans la zone périphérique hors cavité de formation de l'emballage ou produit en général.

Il peut être utile que l'outil de découpe puisse avoir une position réglable ou adaptée sur la plate-forme ou la structure porteuse.

A cet effet, l'outil de découpe (6) est positionné sur une des billes (15) porteuses.

La ou les billes précitées ont une fonction d'articulation et d'orientation de l'outil de découpe par rapport à la structure porteuse afin de compenser les éventuels défauts de géométrie.

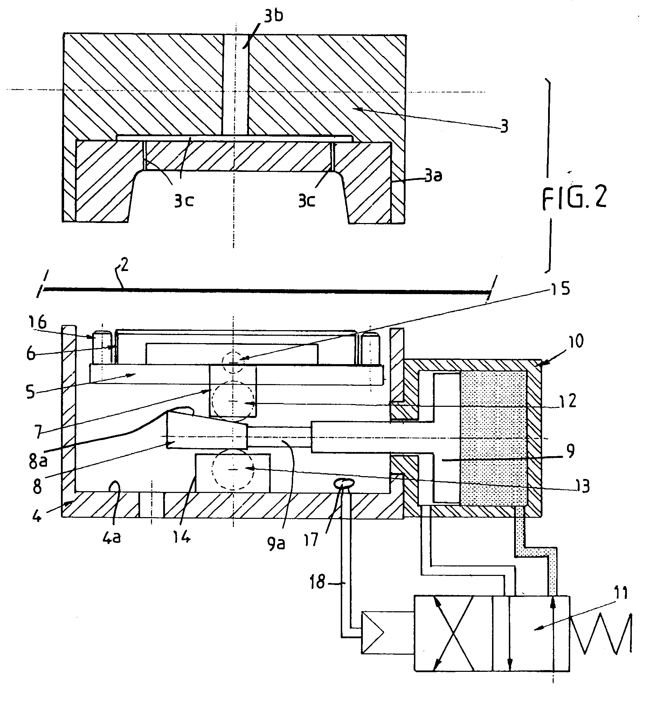

Il convient dès lors d'exposer le fonctionnement du dispositif de l'invention en se référant aux figures 2 à 5.

Le dispositif selon l'invention permet l'exécution d'une ou plusieurs découpes ou prédécoupes sur la pièce thermoformée à l'intérieur du moule de formage pendant l'opération de thermoformage.

A l'état initial (figure 2), les moule et contre-moule sont ouverts et laissent passer le film ou matériau à former. Le moyen de commande (9) ou vérin est en position de sollicitation avec sa tige sortie entièrement, de sorte que l'organe pousseur est développé au maximum amenant sa partie came dans sa position basse par rapport aux ensembles galets (12)/contre-galets (13). Dans cette phase, la structure porteuse (7) de l'organe de découpe (6) est en position basse et donc rentrée à l'intérieur du contre-moule.

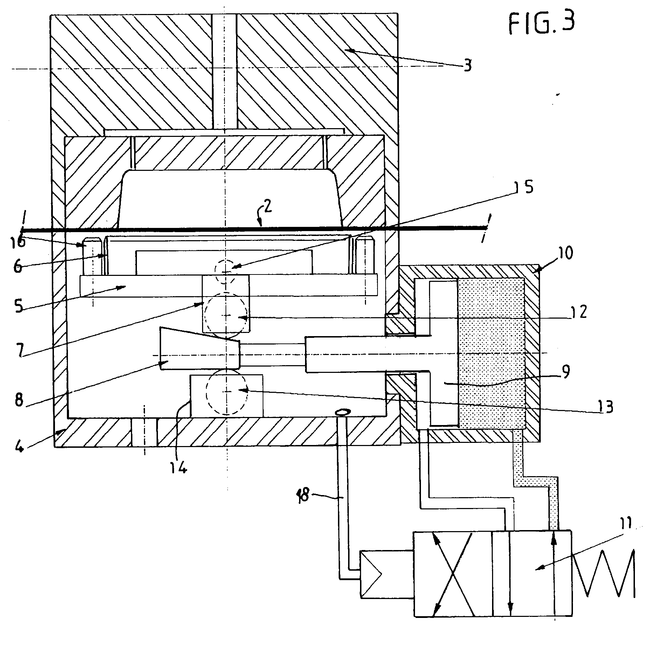

Dans la phase suivante (figure 3), la phase de thermoformage est amorcée et les moule et contre-moule sont rapprochés pour emprisonner le film ou matériau à thermoformer. A ce stade, le moyen de commande (9) reste dans la position décrite précédemment ainsi donc que le bloc de découpe.

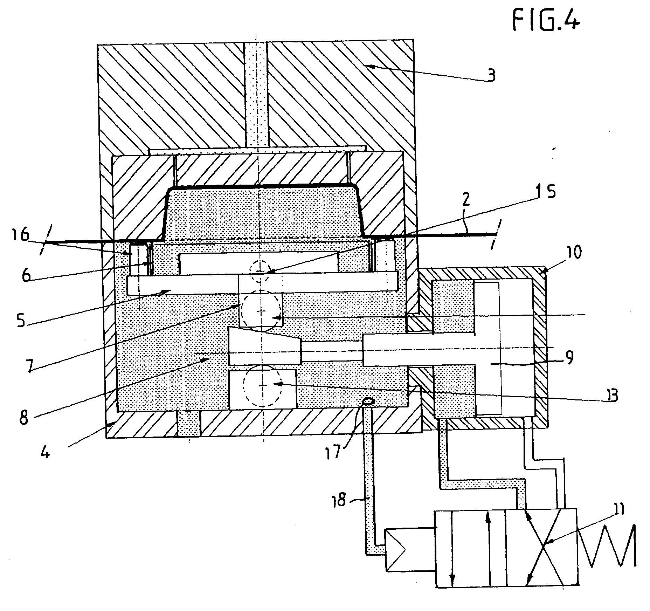

Dans la phase suivante, l'opération de thermoformage s'effectue, entraînant d'une manière connue des effets de dépression et d'aspiration de manière à mettre en forme le film ou matériau dans le fond de la cavité du moule. La pression détectée à l'intérieur du contre-moule à l'aide d'un moyen de contrôle (17) permet d'agir sur le distributeur à commande pneumatique(11). Ce distributeur inverse l'alimentation du vérin (9). La tige de ce dernier se rétracte entraînant alors par l'effet de came du moyen (8) l'élévation de la structure porteuse et du bloc de découpe jusqu'à une position maximum correspondant au retrait total de la tige dans la représentation de la figure 4. Parallèlement à la formation de l'emballage, s'effectue l'opération de prédécoupe grâce aux outils qui sont en contact et pénètrent dans la matière selon la limite donnée par les butées (16).

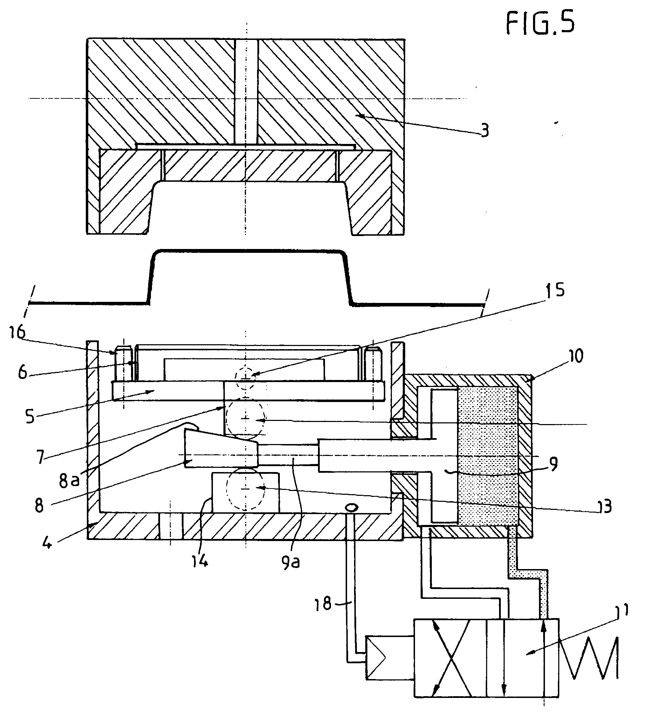

Dans la phase finale représentée figure 5, en fin de thermoformage, il y a une chute de pression constatée dans l'ensemble moule/contre-moule, identifiée par la sonde (17) relatif au distributeur à commande pneumatique (11) qui commande ensuite le vérin (9) dans un mouvement de translation en vue de l'abaissement du bloc de découpe (6) et structure porteuse (7), l'ensemble des composants revenant à la situation de la figure 2. Les moule et contre-moule s'ouvrent et permettent la libération de l'article thermoformé avec ses lignes de prédécoupe. Un autre cycle recommence.

Les avantages ressortent bien de l'invention. On souligne :
- le nouveau concept de formation des découpes ou prédécoupes,
- la simplicité des composants .

Sans sortir du cadre de l'invention, différents aménagements peuvent être prévus. Ainsi la plate-forme (5) et la structure porteuse (7) peuvent être agencées pour former un tout.

## Revendications

1. Dispositif permettant l'exécution de prédécoupe ou découpe sur une pièce thermoformée dans un ensemble moule/contre-moule, caractérisé en ce que :
- ledit contre-moule (4) est agencé pour recevoir intérieurement une plate-forme (5) support d'un bloc de découpe (6) susceptible de réaliser dans certaines phases de fonctionnement la ou les lignes de prédécoupe ou des découpes du matériau,
- la plate-forme (5) est montée sur une structure porteuse (7),
- la structure (7) est susceptible d'être translatée dans un mouvement vertical élévateur ou descendant selon la phase de fonctionnement du dispositif, à l'aide d'un moyen pousseur (8) formant came associé à un moyen de commande (9),
- le bloc de découpe assure la formation de la ou des lignes de découpe lors de la fermeture du moule/contre-moule et formation de la pièce thermoformée.

2. Dispositif selon la revendication 1, caractérisé en ce que le contre-moule (4) présente une forme évidée (4a) intérieurement susceptible de recevoir intérieurement les mécanismes précités, et en ce que adjacent au contre-moule, est prévue une chambre (10) susceptible de recevoir le moyen de commande (9) sous forme d'un vérin dont la tige (9a) est solidaire et accouplée de toute manière appropriée avec le moyen pousseur (8) formant came, ledit vérin pneumatique étant commandé à partir d'un distributeur à commande pneumatique (11), lui-même sollicité par un moyen de détection (17) de la pression à l'intérieur de l'ensemble moule/contre-moule.

3. Dispositif selon la revendication 2, caractérisé en ce que le moyen pousseur (8) présente un profil supérieur à section dégressive formant rampe (8a) dont l'orientation se situe en regard du vérin, cette rampe faisant office de came lors du déplacement du moyen pousseur.

4. Dispositif selon la revendication 3, caractérisé en ce que ledit moyen pousseur est disposé et guidé entre un ou des ensembles de galets (12) et contre-galets (13), les contre-galets (13) étant situés à partir de moyens supports (14) fixés dans le fond du contre-moule (4), les galets (12) étant associés avec la structure porteuse (7).

5. Dispositif selon la revendication 4, caractérisé en ce que la structure porteuse (7) est agencée avec des moyens qui permettent son maintien et sa fixation par rapport aux côtés latéraux du contre-moule et est soumise à un mouvement d'élévation ou d'abaissement.

6. Dispositif selon les revendications 1 et 2, caractérisé en ce que l'outil de découpe ou de prédécoupe (6) est positionné sur la plate-forme (5) associée à la structure porteuse (7) d'une manière démontable par rapport à celle-ci pour permettre le changement des moyens de découpe en fonction des besoins.

7. Dispositif selon les revendications 1 et 2, caractérisé en ce que latéralement, la structure porteuse (7) de la plate-forme (5) présente des butées (16) d'arrêt, calibrées, qui limitent la profondeur de découpe à réaliser sur le matériau sur toute ou partie de l'épaisseur de celui-ci, ces butées étant positionnées en regard du moule dans la zone périphérique hors cavité de formation de l'article thermoformé.

8. Dispositif selon les revendications 1 et 2, caractérisé en ce que le bloc de découpe est positionné sur la plate-forme (5) avec des billes intermédiaires ayant une fonction d'articulation et d'orientation de l'outil de découpe par rapport à la structure porteuse afin de compenser les éventuels défauts de géométrie.

9. Dispositif selon la revendication 2, caractérisé en ce que le moyen de détection (17) de la pression est une sonde mesurant la pression dans la cavité du contre-moule et étant relié au distributeur (11) par un conduit (18).
